Europäisches Patentamt

(19) European Patent Office

Office européen des brevets

(11) Publication number : **0 324 620 B1**

(12) **EUROPEAN PATENT SPECIFICATION**

(45) Date of publication of patent specification :
02.01.92 Bulletin 92/01

(51) Int. Cl.⁵ : **G01P 3/26,** G01P 3/28

(21) Application number : **89300266.7**

(22) Date of filing : **12.01.89**

(54) Angular velocity sensor.

(30) Priority : **13.01.88 JP 5396/88**

(43) Date of publication of application :
**19.07.89 Bulletin 89/29**

(45) Publication of the grant of the patent :
**02.01.92 Bulletin 92/01**

(84) Designated Contracting States :
**DE FR GB**

(56) References cited :
**US-A- 4 020 699**
**US-A- 4 026 159**
**US-A- 4 408 490**

(73) Proprietor : **HONDA GIKEN KOGYO
KABUSHIKI KAISHA
1-1, 2-chome Minami-Aoyama
Minato-ku Tokyo (JP)**

(72) Inventor : **Takahashi, Tsuneo
c/o Kabushiki Kaisha Honda Gijutsu
Kenkyusho
4-1, 1-chome, Chuo Wako-shi Saitama (JP)**
Inventor : **Nishio, Tomoyuki
c/o Kabushiki Kaisha Honda Gijutsu
Kenkyusho
4-1, 1-chome, Chuo Wako-shi Saitama (JP)**
Inventor : **Ikegami, Masayuki
c/o Kabushiki Kaisha Honda Gijutsu
Kenkyusho
4-1, 1-chome, Chuo Wako-shi Saitama (JP)**
Inventor : **Gunji, Takahiro
c/o Kabushiki Kaisha Honda Gijutsu
Kenkyusho
4-1, 1-chome, Chuo Wako-shi Saitama (JP)**

(74) Representative : **Muir, Ian R. et al
HASELTINE LAKE & CO. Hazlitt House 28
Southampton Buildings Chancery Lane
London WC2A 1AT (GB)**

## Description

The present invention relates to an angular velocity (gas rate) sensor which is capable of detecting angular velocity.

In general, an angular velocity sensor provides an output signal in response to any difference between the output signals supplied from a pair of thermal sensing elements. US-A-4020699, for example, discloses an angular velocity sensor having a measurement bridge which is used to determine the resistances of the pair of thermal sensing elements, the output signal supplied from the angular velocity sensor being dependent on the difference in the resistances measured by the measurement bridge. A difference between the resistances of the thermal sensing elements appears when the gas flow ejected from a gas nozzle deviates, to flow more on one of the thermal sensing elements than on the other, due to the influence on the gas flow of an applied motion the angular velocity of which is to be determined in terms of its magnitude and direction.

The angular velocity is determined by detecting a small imbalance in the heat dissipation from the pair of thermal sensing elements due to the deviation of the gas flow, and therefore the surrounding temperature change significantly reduces the sensitivity of the angular velocity sensor. This necessitates the use of temperature compensating means in the angular velocity sensor.

In an attempt to reduce the adverse effects caused by the surrounding temperature the angular velocity sensor is subjected to forced heating by using appropriate heaters, and the temperature within the angular velocity sensor is detected by appropriate temperature sensors, and the temperature within the angular velocity sensor is controlled to keep it constant.

Disadvantageously, the sensitivity of the angular velocity sensor and the offset value remain too unstable to provide an accurate output signal until the temperature within the angular velocity sensor has reached a stable condition after connecting the electric heater to an associated power supply. In fact, no satisfactory gas temperature control has yet been attained in a angular velocity sensor.

With the above in mind the present invention seeks to provide a angular velocity sensor which is capable of correcting the angular velocity sensor output signal in a way so as to account for an instantaneous temperature change within the angular velocity sensor, allowing the temperature within the angular velocity sensor to vary.

According to the present invention there is provided an angular velocity sensor which provides an output signal in response to any difference between the output signals from a pair of thermal sensing elements due to the force which an angular velocity applied motion exerts on the gas flow ejected over the pair of thermal sensing elements, from an associated nozzle, characterized in that the angular velocity sensor is provided with a temperature compensation circuit for correcting the angular velocity sensor output signal by subtracting from the angular velocity sensor output signal an offset value which is initially stored in the temperature compensation circuit in accordance with the characteristics of the heating wires in the angular velocity sensor, the temperature compensation circuit making a decision as to whether or not the angular velocity sensor output signal remains within a predetermined tolerance with respect to the offset value, when the resistances detected by a resistance detection circuit increase or decrease together, such that if the angular velocity sensor output signal remains within the predetermined tolerance the temperature compensation circuit will carry out correction by using the current angular velocity sensor output signal as a new offset value in place of the old one so that the angular velocity sensor output signal tends to zero.

For a better understanding of the present invention, and to show how it may be carried into effect, reference will now be made, by way of example, to the accompanying drawings, in which :

Figure 1 shows diagrammatically an angular velocity (gas rate) sensor equipped with temperature compensation means.

Figure 2 is a circuit diagram of a resistance detection circuit ;

Figure 3 is a longitudinal section of the angular velocity sensor ;

Figure 4 shows how the gas flow deviates when the gas rate sensor is moved at an angular velocity to be determined ; and

Figure 5 is a graph representing the temperature-to-resistance characteristics of a pair of heating wires.

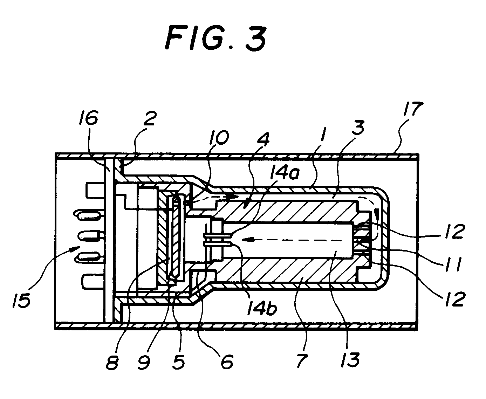

Referring to Figure 3, the casing 1 of the gas rate sensor is open at one and, and is closed at the other end. The casing 1 has three longitudinal ridges 120 degrees apart from each other on its inner surface. When the gas rate sensor body 4 is put in the casing 1, these longitudinal ridges define three longitudinal channels 3.

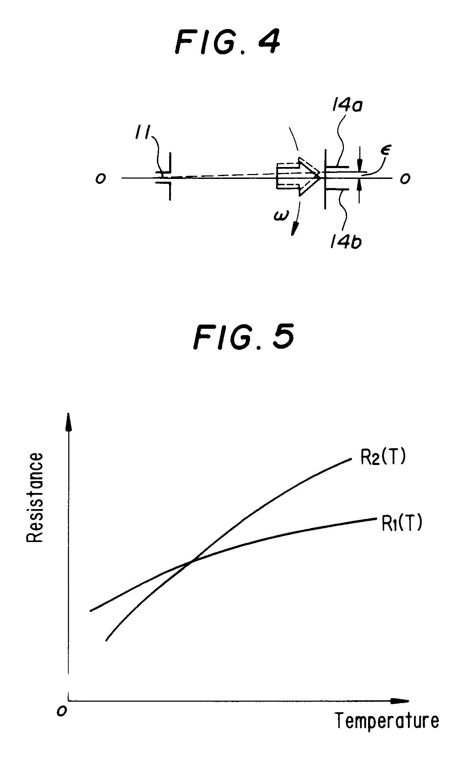

As seen from the drawing, the gas rate sensor body 4 is composed of a holder section 5, a neck section 6 and a cylinder section 7. The holder section 5 serves to confine the gas within the casing 1. The holder section 5 has a pump compartment 8, and the pump compartment 8 contains a diaphragm type piezoelectric pump 9. When the pump 9 works, gas is drawn in the longitudinal channels 3 through the inlets 10 of the holder section 5. After passing through a central nozzle 11 and rectifying apertures 12, positioned around the nozzle in the end of the cylinder section 7, the gas is drawn into a sensor compartment 13 in the form of laminar flow. Then, the gas flows over a pair of heating wires 14a and 14b, which are used as thermal sensing elements and are positioned downstream of the sensor compartment 13. Thereafter, the gas flows into the pump compartment 8, where it is directed to the longitudinal channels 3 by pumping. The pair of heating wires 14a and 14b are located symmetrically with respect to the center line o-o of the nozzle 11, as seen from Figure 4. When no force is applied to the gas rate sensor in a lateral direction, the gas is ejected from the nozzle 11, flowing straight along the center line o-o, and exposing each of the heating wires 14a and 14b to an equal gas flow rate, and hence cooling each heating wire equally.

When a lateral force is applied to the gas rate sensor to cause it to move at an angular velocity, the gas flow will deviate from the center line o-o as shown in broken lines. The amount of deviation is indicated by "ε". As a result, the gas flows more on heating wire 14a than on heating wire 14b, thus causing unbalanced outputs from the two heating wires. Then, a signal representing the difference between the unbalanced outputs will appear at the output terminal of the gas rate sensor, and the output signal will be amplified by an amplifier circuit 15. The polarity and amplitude of the amplified signal represents the direction and magnitude of the angular velocity of the gas rate sensor, respectively.

A printed board 16 of the amplifier circuit 15 is attached to the flange 2 of the casing 1 as seen from Figure 3. A hollow cylinder 17 contains the whole structure of the gas rate sensor.

A signal appearing at the output terminal of the gas rate sensor is likely to vary with surrounding temperature. The gas rate sensor output signal x is given by :

$$X = (R_2 (T)/R_1 (T)) - 1 \quad (1)$$

where $R_1 (T)$ stands from the resistance of the heating wire 14a at temperature T and $R_2 (T)$ stands for the resistance of the heating wire 14b at temperature T.

If two heating wires 14a and 14b have the same temperature-to-resistance characteristic (i.e. $R_1 (T)$ is equal to $R_2 (T)$), and if the gas rate sensor has no angular velocity, the sensor output signal x will be zero as seen from equation (1). In this ideal case no correction of the gas rate sensor output signal will be required.

However, it is difficult to select and use a pair of heating wires 14a and 14b which have the same temperature-to-resistance characteristic. Usually, two heating wires 14a and 14b have different characteristics as shown in Figure 5. Therefore, even if the gas rate sensor has no angular velocity, the gas rate sensor output signal cannot be zero. Also, an error will be caused in detecting the angular velocity of the gas rate sensor because these heating wires do not have the same temperature-to-resistance characteristic.

Necessary temperature compensation of the gas rate sensor output signal x will be effected according to the present invention as follows :

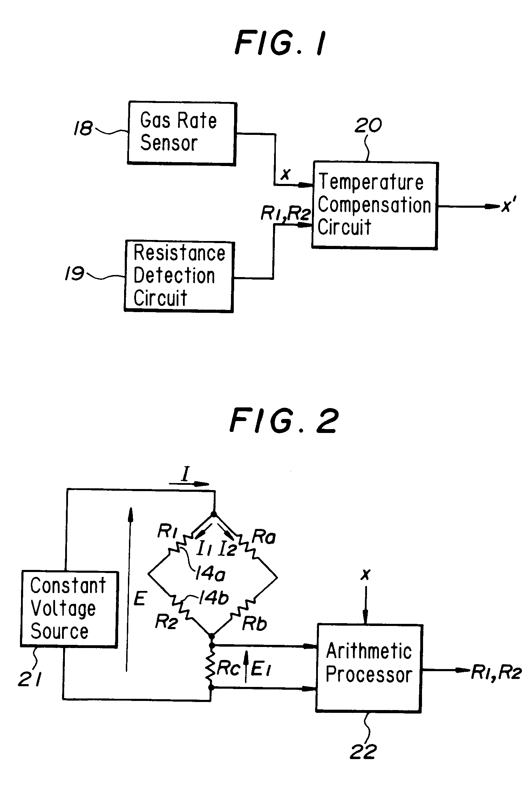

Figure 1 shows a gas rate sensor system according to one embodiment of the present invention. It comprises a gas rate sensor 18, a resistance detection circuit 19 for detecting the resistances $R_1$ and $R_2$ of the heating wires 14a and 14b used in the gas rate sensor 18, and a temperature compensation circuit for effecting a temperature compensation of the gas rate sensor output x in response to the detected heating wire resistances $R_1$ and $R_2$ and the gas rate sensor output signal x. Figure 2 shows the structure of the resistance detection circuit 19 comprising : a bridge made from the heating wires 14a and 14b and two known resistances Ra and Rb ; another known resistance series-connected to the bridge ; and a constant voltage source 21, producing a voltage E, connected across the bridge and the resistance Rc. An arithmetic processor 22 is connected across the series resistance Rc, and the arithmetic processor 22 uses the voltage $E_1$ appearing across the series resistance Rc, and the gas rate sensor output signal x to carry out the following arithmetic operation for determining the resistances $R_1$ and $R_2$ of the heating wires 14a and 14b ;

The following equation hold for the resistance circuit of Figure 2 :

$$E - E_1 = (R_1 + R_2) I_1 = (Ra + Rb) I_2 \quad (2)$$

$$I_1 + I_2 = I \quad (3)$$

$$E_1 = I \cdot Rc \quad (4)$$

From equations (2), (3) and (4) the following equation is derived :

$$R_1 + R_2 = Rc(E - E_1)(Ra + Rb) - Rc(E - E_1) \quad (5)$$

If $(R_1 + R_2)$ is represented by y, then,

$$(R_1 + R_2) = y \quad (6)$$

The gas rate sensor output signal x is given by Equation (1) as follows :

$$x = (R_2/R_1) - 1 \quad (7)$$

Thus, from Equations (5), (6) and (7) $R_1$ and $R_2$ are derived as follows :

$$R_1 = y/(x + 2) \quad (8)$$

$$R_2 = y/(x + 1)/(x + 2) \quad (9)$$

By detecting the voltage $E_1$ across the resistance

Rc the resistance $R_1$ and $R_2$ of the heating wires 14a and 14b can be determined from Equations (8) and (9) in real-time.

The temperature compensation circuit 20 corrects the gas rate sensor output signal x by subtracting from the gas rate sensor output signal x an offset value which is initially stored in the temperature compensation circuit 20 in accordance with the characteristics of the heating wires 14a and 14b in the gas rate sensor 18. Then, the temperature compensation circuit 20 makes a decision as to whether or not the gas rate sensor output signal x remains within a predetermined tolerance with respect to the offset value, when the resistances $R_1$ and $R_2$ detected by the resistance detection circuit 19 increase or decrease together. If the gas rate sensor output signal x remains within the predetermined tolerance the temperature compensation circuit 20 will carry out correction by using the current gas rate sensor output signal x as a new offset value in place of the old one so that the gas rate sensor output signal x tends to zero.

If the gas sensor output signal x lies outside the predetermined tolerance the temperature compensation circuit 20 will not change the offset value, regarding the gas rate sensor as having an angular velocity.

As apparent from above, a gas rate sensor system according to the present invention determines the resistances of the pair of heating wires of the gas rate sensor in order to detect the temperature change of the surrounding atmosphere of the heating wires in terms of the simultaneous increase or decrease of the pair of heating wire resistances. It is presumed that the gas rate sensor has no angular velocity when the gas rate sensor output signal remains within a given tolerance, such that the current gas rate sensor output signal is nearly equal to the predetermined offset value. The current gas rate sensor output signal is then used as a offset value. Thus, appropriate temperature compensation of the gas rate sensor output signal can be made, to account for the temperature change of the atmosphere surrounding the pair of heating wires.

If a car is equipped with a gas rate sensor system according to the present invention for detecting any change in its direction of movement, the offset value can be updated without stopping the car for that purpose.

## Claims

1. An angular velocity sensor which provides an output signal in response to any difference between the output signals from a pair of thermal sensing elements (14a, 14b) due to the force which an angular velocity applied motion exerts on the gas flow ejected over the pair of thermal sensing elements (14a, 14b) from an associated nozzle (11), characterized in that the angular velocity sensor is provided with a temperature compensation circuit 20 for correcting the angular velocity sensor output signal x by subtracting from the angular velocity sensor output signal x an offset value which is initially stored in the temperature compensation circuit 20 in accordance with the characteristics of the heating wires 14a and 14b in the angular velocity sensor 18, the temperature compensation circuit 20 making a decision as to whether or not the angular velocity sensor output signal x remains within a predetermined tolerance with respect to the offset value, when the resistances $R_1$ and $R_2$ detected by a resistance detection circuit 19 increase or decrease together, such that if the angular velocity sensor output signal x remains within the predetermined tolerance the temperature compensation circuit 20 will carry out correction by using the current angular velocity sensor output signal x as a new offset value in place of the old one so that the angular velocity sensor output signal x tends to zero.

2. An angular velocity sensor according to claim 1 wherein the resistance detection circuit 19 comprises a bridge circuit composed of the connection in parallel of a series connected branch of said pair of thermal sensing elements (14a, 14b) and a series connected branch of a first and second known resistance (Ra, Rb), and a third resistance (Rc), connected in series to said bridge circuit ; in which the voltage appearing across said third resistance (Rc), when a dc voltage is applied across said bridge circuit and said third resistance (Rc), is determined, and an arithmetic operation is effected on the determined voltage and the angular velocity sensor output signal to determine the resistances of said pair of thermal sensing elements (14a, 14b).

## Patentansprüche

1. Winkelgeschwindigkeitsaufnehmer, welcher ein Ausgangssignal beim Vorliegen einer Differenz zwischen den Ausgangssignalen eines Paares von Wärmefühlern (14a,14b) im Hinblick auf jene Kraft abgibt, welche eine Bewegung mit aufgeprägter Winkelgeschwindigkeit auf den von einer zugeordneten Düse (11) austretenden und über das Paar von Wärmefühlern (14a, 14b) strömenden Gasstrom ausübt, dadurch gekennzeichnet, daß der Winkelgeschwindigkeitsaufnehmer mit einem Temperaturkompensationskreis (20) ausgestattet ist, um das Ausgangssignal (x) des Winkelgeschwindigkeitsaufnehmers durch Subtrahieren eines Abweichwertes, welcher zunächst im Temperaturkompensationskreis (20) entsprechend den Merkmalen der Heizdrähte (14a und 14b) im Winkelgeschwindigkeitsaufnehmer (18) gespeichert worden ist, vom Ausgangssignal (x) zu korrigieren, wobei der Temperaturkompensationskreis (20) gleichgültig ob das Ausgangssignal (x) des Winkelgeschwindigkeitsaufnehmers mit Bezug auf den Abweichwert innerhalb einer vorbestimmten Toleranz verbleibt oder nicht, dann, wenn die von einem Widerstandsmeßkreis (19) erfaßten Widerstände $R_1$ und $R_2$ gleichzeitig zunehmen oder abnehmen eine solche Entscheidung trifft, daß bei innerhalb der vorbestimmten Toleranz verbleibendem Ausgangssignal (x) des Winkelgeschwindigkeitsaufnehmers der Temperaturkompensationskreis (20) eine Korrektur unter Verwendung des vorhandenen Ausgangssignals (x) des Winkelgeschwindigkeitssensors als neues Abweichsignal an Stelle des alten Abweichsignals in solcher Weise durchführt, daß das Ausgangssignal (x) des Winkelgeschwindigkeitsaufnehmers nach Null strebt.

2. Winkelgeschwindigkeitsaufnehmer nach Anspruch 1, worin der Widerstandsmeßkreis (19) einen aus einer Parallelschaltung einer Reihenschaltun, des Paares von Wärmefühlern (14a, 14b) und einer Reihenschaltung eines ersten und eines zweiten bekannten Widerstandes (Ra, Rb) bestehenden Brückenkreis und einen in Reihe zum Brückenkreis geschalteten dritten Widerstand (Rc) aufweist, wobei die beim Anlegen einer Gleichspannung an den Brückenkreis und an den dritten Widerstand (Rc) am dritten Widerstand (Rc) auftretende Spannung bestimmt und mit der so bestimmten Spannung und dem Ausgangssignal des Winkelgeschwindigkeitssensors eine arithmetische Operation durchgeführt wird, um die Widerstände des Paares von Wärmefühlern (14a, 14b) zu ermitteln.

## Revendications

1. Capteur de vitesse angulaire produisant un signal de sortie en réponse à une différence entre les signaux de sortie de deux éléments de détection thermique (14a, 14b) sous l'effet de la force avec laquelle une vitesse angulaire d'un mouvement appliqué s'exerce sur le courant de base éjecté par une buse associée (11) sur les deux éléments de détection thermique (14a, 14b), caractérisé en ce que le capteur de vitesse angulaire comporte un circuit de compensation de température (20) destiné à corriger le signal de sortie x du capteur de vitesse angulaire en soustrayant du signal de sortie x du capteur de vitesse angulaire une valeur de décalage qui est initialement mémorisée dans le circuit de compensation de température (20) en fonction des caractéristiques des fils chauffants (14a et 14b) dans le capteur de vitesse angulaire (18), le circuit de compensation de température (20) décidant si le signal de sortie x du capteur de vitesse angulaire reste ou non dans des tolérances prédéterminées par rapport à la valeur de décalage quand les résistances ($R_1$ et $R_2$) détectées par un circuit de détection de résistance (19) augmentent ou diminuent ensemble de manière que si le signal de sortie x du capteur de vitesse angulaire reste dans les tolérances prédéterminées, le circuit de compensation de température (20) effectue une correction en utilisant le signal de sortie x du capteur de vitesse angulaire en cours comme nouvelle valeur de décalage au lieu de l'ancienne, de manière que le signal de sortie x du capteur de vitesse angulaire tende vers zéro.

2. Capteur de vitesse angulaire selon la revendication 1, dans lequel le circuit de détection de résistance (19) consiste en un circuit en pont constitué par la connexion en parallèle d'une branche desdits deux éléments de détection thermique (14a, 14b) connectés en série et d'une branche d'une première et d'une seconde résistances connues (Ra, Rb) connectées en série et, une troisième résistance (Rc) connectée en série avec ledit circuit en pont ; dans lequel la tension apparaissant aux bornes de ladite troisième résistance (Rc) lorsqu'une tension continue est appliquée aux bornes dudit circuit en pont et de ladite troisième résistance (Rc) est déterminée et une opération arithmétique est effectuée sur la tension déterminée et le signal de sortie du capteur de vitesse angulaire pour déterminer les résistances desdits deux éléments de détection thermique (14a, 14b).

# FIG. 1

18 — Gas Rate Sensor

20

Temperature Compensation Circuit

x

$R_1, R_2$

19 — Resistance Detection Circuit

x'

# FIG. 2

I

$R_1$ $I_1$ $I_2$ $R_a$

14a

14b

$R_2$ $R_b$

Constant Voltage Source

E

21

$R_c$ $E_1$

x

Arithmetic Processor

$R_1, R_2$

22

# FIG. 3

# FIG. 4

# FIG. 5